**Europäisches Patentamt**

**European Patent Office**

**Office européen des brevets**

(11) Veröffentlichungsnummer: **0 431 665 A1**

## (12) EUROPÄISCHE PATENTANMELDUNG

(21) Anmeldenummer: 90203071.7

(22) Anmeldetag: **20.11.90**

(51) Int. Cl.5: **F42B 30/08, F42B 33/02**

(30) Priorität: 06.12.89 CH 4373/89

(43) Veröffentlichungstag der Anmeldung:
**12.06.91 Patentblatt 91/24**

(84) Benannte Vertragsstaaten:
**AT BE CH DE DK ES FR GB GR IT LI LU NL SE**

(71) Anmelder: **Schweizerische Eidgenossenschaft vertreten durch die Eidg. Munitionsfabrik Thun der Gruppe für Rüstungsdienste**
Allmendstrasse 74
CH-3602 Thun(CH)

(72) Erfinder: **Kutzli, Jörg**
**Hofallmend**
**CH-3631 Höfen(CH)**

(74) Vertreter: **Frauenknecht, Alois J.**
c/o PPS Polyvalent Patent Service AG,
Mellingerstrasse 1
CH-5400 Baden(CH)

(54) Verfahren zur Serien-Herstellung von rotationssymmetrischen Munitionskörpern sowie danach hergestellter Munitionskörper.

(57) Auf drei parallellaufenden Fertigungsstrasse (1,2,3,) werden unabhängig voneinander ein äusserer Mantel (14), ein innerer Mantel (15) und ein Sprengkörper (16) gefertigt und auf einer nachfolgenden Montagestrasse (4) zusammengefügt. Die Mäntel (14 und 15) sind so ausgebildet, dass sie eine ausreichende Formstabilität aufweisen, um als separate Bauteile gehandhabt zu werden und erhalten ihre notwendige mechanische Abschussfestigkeit durch ihren Zusammenbau.

Der derart gefertigte Munitionskörper kann durch den Austausch des innern Mantels (15) mit unterschiedlichen Wirkkörpern, je nach vorgesehenem Einsatz, ausgeführt werden

FIG.1

EP 0 431 665 A1

# VERFAHREN ZUR SERIEN-HERSTELLUNG VON ROTATIONSSYMMETRISCHEN MUNITIONSKÖRPERN SOWIE DANACH HERGESTELLTER MUNITIONSKÖRPER

Die Erfindung bezieht sich auf ein Verfahren zur Herstellung von rotationssymmetrischen Munitionskörpern bestehend aus jeweils einem äusseren Mantel, einem als Wirkteil ausgelegten inneren Mantel und einem zentral angeordneten Sprengkörper sowie auf ein nach diesem Verfahren hergestellten Munitionskörper.

Munitionskörper, insbesondere Artillerie- oder Mörsergeschosse, werden üblicherweise dadurch hergestellt, dass hintereinander auf einer Fertigungsstrasse die Geschosshülle gefertigt und dann in sie der Sprengkörper durch Giessen eingebracht wird. Anschliessend ist der Überfluss des gegossenen und erstarrten Sprengstoffes zu entfernen. Oftmals ist auch noch eine mechanische Bearbeitung der Geschossladung notwendig, um beispielsweise Raum für einen Zünder zu schaffen.

Nachteilig bei dem bekannten Verfahren ist es, dass eine Umstellung der Fertigung auf verschiedene Geschossarten, beispielsweise von der Sprengmunition zur Übungsmunition, beträchtliche Zeit in Anspruch nimmt.

Wie die DE-OS 2003990 zeigt, sind bereits universell verwendbare Geschosse bekannt, bei denen je nach dem gewünschten Verwendungszweck nach Art eines Baukastensystems unterschiedliche Komponenten mit einer stets gleichen Geschosshülle verbunden werden. Das in dieser Schrift erläuterte Geschoss hat einen die Geschosshülle aussenseitig umgebenden Geschossmantel.
Trotz der durch das Baukastensystem sich ergebenden Erleichterung bei einer Produktionsumstellung ist diese bei dem Geschoss nach der genannten DE-OS 2003990 noch relativ umständ lich und deshalb zeitaufwendig.

Ein weiterer Nachteil des durch die DE-OS 2003990 bekannten Geschosses liegt darin, dass eine Kontrolle des von der Geschosshülle und dem Geschossmantel eingeschlossenen Sprengkörpers schwierig ist. Solche Kontrollen können nur indirekt, beispielsweise durch Röntgenstrahlen oder Ultraschallreflexion, erfolgen, was aufwendig und teuer ist und den Einsatz geschulten Personals erfordert.

Die US-PS 4,348,956 beschreibt auch schon eine aus zwei durch eine Kupplung miteinander verbindbaren Gehäuseteilen zusammengesetzte Geschosshülle. Dadurch wird es möglich, die Geschosshülle zur Überprüfung der in ihr eingebauten Teile zu öffnen. Weiterhin erlaubt es diese Ausbildung, in immer gleich gestaltete Geschosshüllen für unterschiedliche Anwendungsfälle unterschiedliche Einbauteile zu montieren. Mit dem Problem einer möglichst raschen Umstellung der Fertigung auf unterschiedlich ausgestattete Geschosse befasst sich diese Schrift jedoch nicht.

Der Erfindung liegt die Aufgabe zugrunde, ein Verfahren der eingangs genannten Art so auszubilden, dass ein möglichst rasches Umstellen auf Munitionskörper mit unterschiedlichem Verwendungszweck möglich ist und bei dem der Sprengkörper auf einfache Weise auch von nicht besonders geschultem Personal zuverlässig überprüft werden kann. Weiterhin sollen nach diesem Verfahren herstellbare Munitionskörper geschaffen werden, deren Konfiguration in weiten Grenzen variierbar ist.

Die erstgenannte Aufgabe wird erfindungsgemäss dadurch gelöst, dass der äussere Mantel des Munitionskörpers, der Sprengkörper und der innere Mantel unabhängig voneinander auf parallellaufenden Fertigungsstrassen gefertigt und anschliessend auf einer Montagestrasse zusammengefügt werden.

Durch diese Fertigungsweise ist ein rasches Umstellen auf verschiedenartig ausgebildete Munition möglich. Da die drei Fertigungsstrassen parallel zueinander verlaufen, können beispielsweise Geschosse wesentlich schneller als nach den klassischen Herstellungsmethoden mit nur einer verketteten Fertigungsstrasse fabriziert werden. Weiterhin ist eine einfache Überprüfung aller Bauteile vor ihrer Montage möglich. Insbesondere kann die erforderliche Prüfung des Sprengkörpers auf sehr einfache Weise erfolgen, da dieser als ein separates Bauteil gefertigt wird und somit eine direkte Überprüfung vor seinem Einbringen in die Geschosshülle möglich wird. Das erfindungsgemässe Verfahren erlaubt es sogar, die einzelnen Bauteile in verschiedenen Fertigungsbetrieben herzustellen. Beispielsweise kann die Produktion des sensitiven Sprengkörpers in einem anderen Betrieb erfolgen, als die der mechanischen Bauteile.

Besonders vorteilhaft ist es, wenn in Weiterbildung des erfindungsgemässen Verfahrens der Geschossmantel zum Einschieben in die Geschosshülle ausgebildet wird. Hierdurch wird der Geschossmantel von der Geschosshülle vor Oberflächenbeschädigungen durch Schläge, Fehlmanipulation, Reibung im Lauf und sonstigen Einflüssen wirksam geschützt. Da der Geschossmantel die Festigkeit des Geschosses insgesamt erhöht, kann die Geschosshülle relativ dünnwandig ausgebildet werden, was sich u.a. kostenmässig vorteilhaft auswirkt.

Zur weiteren Erhöhung der Flexibilität trägt es bei, wenn auf der Montagestrasse zusätzliche Bauteile, wie Zünder oder Heckteil, montiert werden.

Die äussere Hülle des Munitionskörpers kann sehr unterschiedlich entsprechend der jeweils bestehenden Anforderungen ausgebildet sein. Ihre Eigenstabilität muss jedoch so gross sein, dass sie eine problemlose Handhabung im Produktionsprozess zulässt.

Die Hülle kann besonders dünnwandig ausgebildet sein, wenn ihre Eigenstabilität beispielsweise durch Verkleben mit dem inneren Mantel erhöht wird, so dass das Ganze (Compound) einen hohen Anteil der Abschussbeanspruchung aufzufangen vermag.

Die Handhabung des separat gefertigten Sprengkörpers ist besonders problemlos, wenn der Sprengkörper durch Ausgiessen eines dünnwandigen Behälters mit Sprengstoff erzeugt wird. Dieser Behälter schützt den Sprengstoff während des Laborierens vor mechanischen Beanspruchungen. Sie bildet zudem eine inerte Schutzhülle gegen chemische Einflüsse vom als Wirkteil dienenden Geschossmantel. Weiterhin sichert das dünne Metallblech des Behälters eine gleichmässige Übertragung der Detonationswelle auf den Geschossmantel, so dass extreme, örtliche Beanspruchungen vermieden werden. Dadurch kann im Falle einer durch Splitter wirkenden Munition vermieden werden, dass einzelne, vorgeformte Splitter sich bereits vor oder während ihrer Beschleunigung zerlegen und deswegen an Wirksamkeit verlieren. Da der Behälter sehr dünnwandig ausgebildet werden kann, behindert er die Abkühlung des gegossenen Sprengstoffes nicht wesentlich, wodurch Lunker und Inhomogenitäten vermieden werden.

Eine alternative Fertigungsmöglichkeit des Sprenkörpers besteht darin, dass er durch Einpressen von Sprengstoff in einen dünnwandigen Behälter erzeugt wird.

Eine besonders gute Haftung des Sprengstoffes in dem Behälter lässt sich erreichen, wenn der Behälter vor dem Eingeben des Sprengstoffes innenseitig lackiert wird.

Die zweitgenannte Aufgabe, nämlich die Schaffung eines nach dem erfindungsgemässen Verfahren hergestellten Geschosses, wird erfindungsgemäss dadurch gelöst, dass der äussere Mantel und der innere Mantel zumindest partiell formschlüssig ineinander gefügt sind und sich gegenseitig in ihren Eigenstabilität ergänzen.

Ein solcher Munitionskörper ist sehr kostengünstig herzustellen und erlaubt bei der Fertigung eine besonders grosse Flexibilität, so dass ein rascher Wechsel auf Geschosse unterschiedlicher Anwendung möglich ist.

Der Geschossmantel hat eine ausreichende Festigkeit, um als separates Bauteil vor seinem Einbau in die Geschosshülle gehandhabt werden zu können, wenn gemäss einer anderen Ausgestaltung der Erfindung der Geschossmantel als ein in die Geschosshülle einschiebbarer Körper ausgebildet ist, welcher aus in eine Kunststoffmatrix eingebundene Wirkkörper besteht.

Als Wirkkörper dienen Brandsplitter, pyrotechnische Sätze, metallische Reaktionselemente und/oder Kampfstoffe.

Nachfolgend werden anhand von Zeichnungen Ausführungsbeispiele des Erfindungsgegenstandes beschrieben.

Es zeigen:

Fig. 1    eine aus drei parallelen Fertigungsstrassen und einer Montagestrasse bestehende Fabrikation von Munitionskörpern,

Fig. 2    ein auf der Fertigungseinrichtung Fig. 1 hergestelltes Mörsergeschoss,

Fig. 3    einen ebenso hergestellten Munitionskörper einer nichtballistischen Rakete sowie

Fig. 4    eine charakteristische rautenförmige Anordnung für Gewehrgranaten und

Fig. 5    einen annähernd kugelförmigen Munitionskörper.

In sämtlichen Figuren sind gleiche Funktionsteile mit gleichen Bezugsziffern versehen.

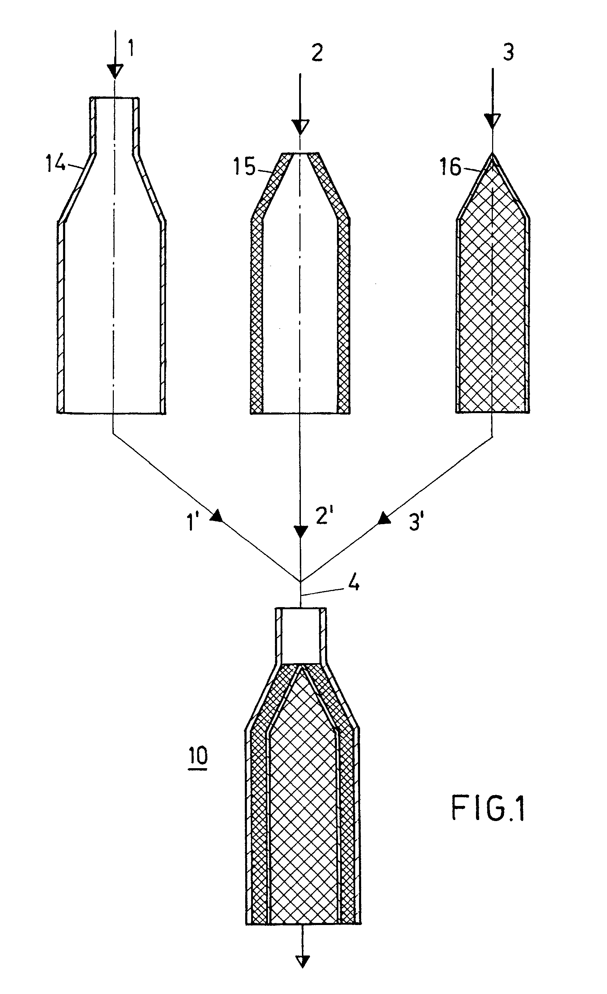

In Fig. 1 sind schmatisch dargestellt drei parallellaufende Fertigungsstrassen 1, 2 und 3 ersichtlich, welche über Umlenkförderer 1', 2' und 3' in einer Montagestrasse 4 zusammenlaufen. Auf der Fertigungsstrasse 1 werden ausschliesslich äussere Mäntel 14 gefertigt. Die Fertigungsstrasse 2 dient der Herstellung von inneren Mänteln 15, den Wirkteilen des Munitionskörpers. Diese sind dem jeweiligen Verwendungsfall angepasst und bestehen beispielsweise aus in einer Kunststoffmatrix eingebetteten vorfabrizierten Splittern.

Auf der Fertigungsstrasse 3 werden Sprengkörper 16 hergestellt. Diese bestehen jeweils aus durch Giessen oder Pressen verformten und verdichteten Sprengstoff.

Auf der sich anschliessenden Montagestrasse 4 werden die vorgenannten Bauteile zu einem fertigen Geschoss zusammenmontiert. Weiterhin können dort zusätzliche Komponenten, wie Zünder oder Geschoss-Heckteile mit ihrem Leitwerk, montiert werden.

Entsprechend diesem Fertigungsverfahren sind die Munitionskörper ausgestaltet:

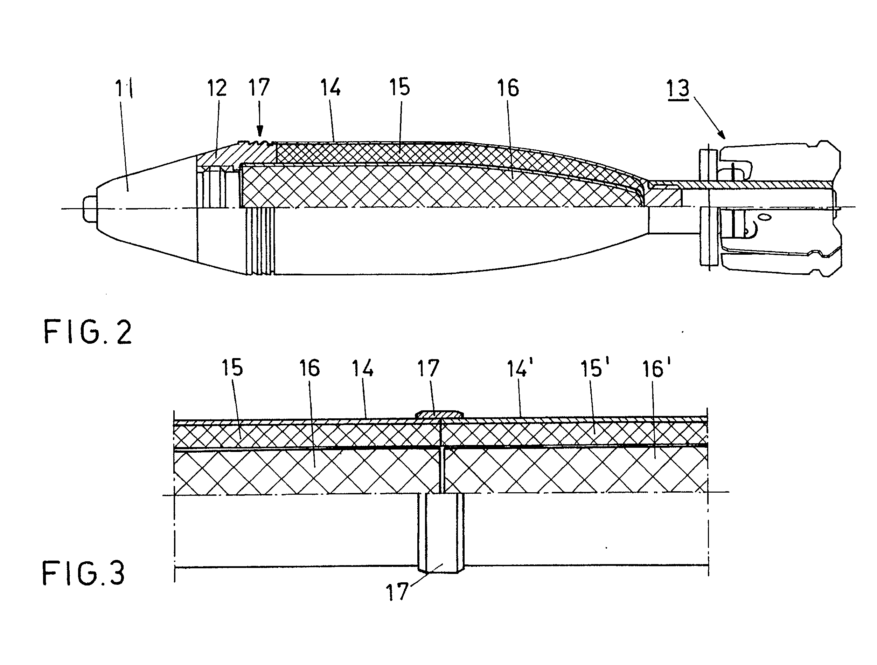

Das Mörsergeschoss Fig. 2 weist eine in der üblichen Art ausgebildete Spitze mit einem Zünder 11 auf. Es ist über einen Stahlring 12, auf welchem die ebenfalls bekannten Gleit- bzw. Dichtungsringe 17 ersichtlich sind, mit dem äusseren Mantel 14 des Geschosses verbunden. Ein innerer Mantel 15 weist den durch Splitter gebildeten Wirkteil des Geschosses auf und umschliesst konzentrisch einen Sprengkörper 16. Das Leitwerk 13 ist in der üblichen Art am Munitionskörper befestigt.

Die gleiche Bauweise ist aus dem Munitionskörper, Fig. 3, einer gesteuerten, nichtballistischen Rakete (z.B. Cruise-Missile) zu sehen. Die einzel gefertigten und auf der Montage strasse 4 zusammengefügten äusseren Mäntel 14, 14', inneren Mäntel 15, 15' und Sprengrohre 16, 16' sind durch den Dichtungsring 17 kraftschlüssig verbunden.

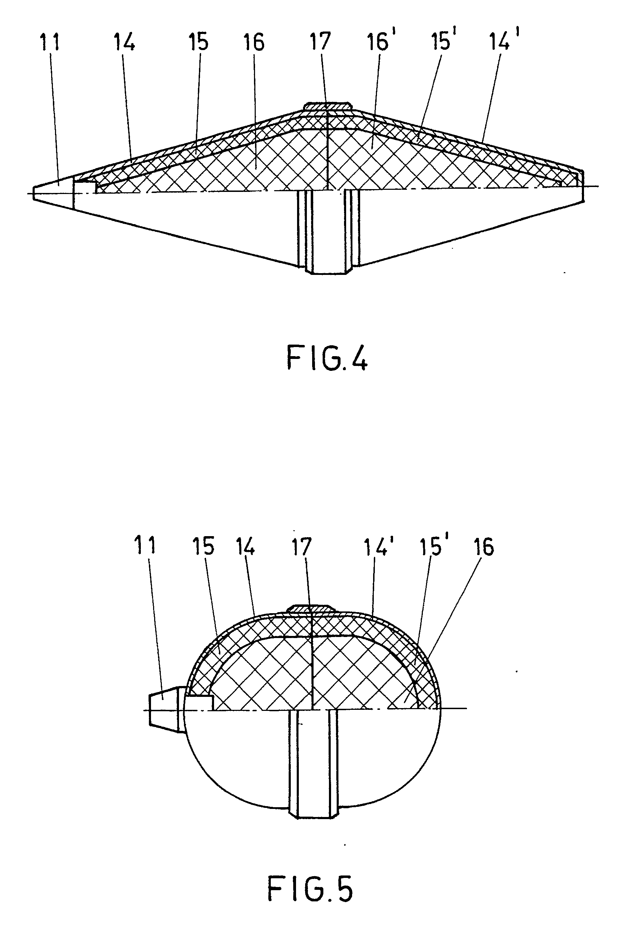

Wie die Fig. 4 zeigt, lassen sich auch sehr unkonventionell aussehende Munitionskörper nach dieser Fertigungsmethode herstellen.

Ein weiteres Beispiel ist die Darstellung gemäss Fig. 5, welche einen Munitionskörper mit einer annähernd isotropen Splitterverteilung charakterisiert. Diese Art wird sowohl für Handgranaten als auch für Tiefflug-Abwurfbomben verwendet.

Durch das präzise Ineinanderfügen der einzelnen Bauteile lassen sich deren Hüll- und Stützkörper werkstoffmässig minimalisieren. Durch gegenseitiges Verkleben können grosse Abschussbeschleunigungen übertragen bzw. im Munitionskörper verteilt werden.

Als Folge der konzentrischen Bauweise und Montage der Munitionskörper lässt sich ihre konstruktive Ausgestaltung weitgehend auf die zu erwartenden mechanischen Beanspruchungen auslegen und die resultierenden Kraftübertragungen mit der Dimensionierung weitgehendst festlegen. - Dies ist ein weiterer Vorteil gegenüber der konventionellen Fabrikation.

Das Baukastenprinzip erlaubt, die inneren Mäntel dem vorgesehenen taktischen Einsatz auch im Feld auszutauschen.

## Ansprüche

1. Verfahren zur Serien-Herstellung von rotationssymmetrischen Munitionskörpern bestehend aus jeweils einem äusseren Mantel, einem als Wirkteil ausgelegten inneren Mantel und einem zentral angeordneten Sprengkörper, dadurch gekennzeichnet, dass der äussere Mantel des Munitionskörpers, der Sprengkörper und der innere Mantel unabhängig voneinander auf parallellaufenden Fertigungsstrassen gefertigt und anschliessend auf einer Montagestrasse zusammengefügt werden.

2. Verfahren nach Anspruch 1, dadurch gekennzeichnet, dass der innere Mantel in die äussere Hülle eingeschoben und fixiert wird.

3. Verfahren nach den Ansprüchen 1 und 2, dadurch gekennzeichnet, dass die ineinander geschobenen Mäntel durch Verkleben gegenseitig gesichert werden.

4. Verfahren nach den Ansprüchen 1 oder 2, dadurch gekennzeichnet, dass auf der Montagestrasse zusätzliche Bauteile, wie Zünder oder Heckteil, montiert werden.

5. Munitionskörper nach zumindest einem der vorangehenden Ansprüche, dadurch gekennzeichnet, dass der äussere Mantel (14) und der innere Mantel (15) zumindest partiell formschlüssig ineinander gefügt sind und sich gegenseitig in ihrer Eigenstabilität ergänzen.

6. Munitionskörper nach einem der vorangehenden Ansprüche, dadurch gekennzeichnet, dass der Sprengkörper (16) kraftschlüssig im inneren Mantel (15) eingesetzt ist.

7. Munitionskörper nach Anspruch 6, dadurch gekennzeichnet, dass der Sprengkörper (16) von einer Dünnblech-Hülle umgeben ist.

8. Munitionskörper nach Anspruch 6, dadurch gekennzeichnet, dass der innere Mantel (15) als ein in den äusseren Mantel (14) einschiebbarer Körper ausgebildet ist, welcher in eine Kunststoffmatrix eingebundene Brandsplitter enthält.

9. Munitionskörper nach einem der Ansprüche 5 bis 7, dadurch gekennzeichnet, dass der innere Mantel (15) wenigstens einen pyrotechnischen Satz enthält.

10. Munitionskörper nach einem der Ansprüche 5 bis 7, dadurch gekennzeichnet, dass der innere Mantel (15) metallische Reaktionselemente wie Thermitladungen und/oder Koruskative enthält.

11. Munitionskörper nach einem der Ansprüche 5 bis 7, dadurch gekennzeichnet, dass der innere Mantel (15) in mechanische Bindemittel eingelagerte und/oder gekapselte Kampfstoffe enthält.

FIG.1

FIG.2

FIG.3

EP 0 431 665 A1

FIG.4

FIG.5

Europäisches
Patentamt

**EUROPÄISCHER
RECHERCHENBERICHT**

Nummer der Anmeldung

**EP 90 20 3071**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X,Y | FR-E-7 290 4 (SOCIETE TECHNIQUE DE RECHERCHES INDUSTRIELLES ET MECANIQUES) * Seite 1, rechte Spalte, Absatz 2-8; Figuren 1-5 * * Seite 2, linke Spalte, Absatz 5,6 * - - - | 1,4,2,3, 5-11 | F 42 B 30/08 F 42 B 33/02 |
| X,Y | CH-A-3 999 58 (HOTCHKISS-BRANDT) * Seite 2, Zeilen 23 - 43; Figuren 1-3, 5 * * Seite 2, Zeilen 77 - 110 * - - - | 1,2,3, 5-11 | |
| X | FR-A-5 939 99 (BLANC) * das ganze Dokument * - - - | 1,5,9,10 | |
| X | FR-A-2 343 988 (RHEINMETALL GMBH) * Seite 2, Zeilen 2 - 35; Figur * * Seite 5 * - - - | 1 | |
| A | FR-A-2 070 728 (METHONICS) * Seite 2, Zeile 24 - Seite 3, Zeile 6; Figuren 1-8, 15-17 * * Seite 7, Zeile 16 - Seite 8, Zeile 7 @ Seite 15, Zeile 25 -Seite 16, Zeile 3 * * Seite 18, Zeile 16 - Seite 19, Zeile 12 * * Seite 24, Zeilen 1 - 16 * * Seite 24, Zeilen 25 - 35 * - - - - - | 1-5,7-10 | |

**RECHERCHIERTE SACHGEBIETE (Int. Cl.5)**

F 42 B

Der vorliegende Recherchenbericht wurde für alle Patentansprüche erstellt

| Recherchenort | Abschlußdatum der Recherche | Prüfer |
|---|---|---|
| Den Haag | 24 Januar 91 | VAN DER PLAS J.M. |

KATEGORIE DER GENANNTEN DOKUMENTE
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus anderen Gründen angeführtes Dokument
------------------------------------------------------------
& : Mitglied der gleichen Patentfamilie, übereinstimmendes Dokument